# EUROPÄISCHE PATENTANMELDUNG

(11) **EP 1 070 825 A2**
(43) Veröffentlichungstag der Anmeldung: **24.01.2001**
(21) Anmeldenummer: 00114267.8
(22) Anmeldetag: 04.07.2000
(51) Int. Cl.: E06B 3/80, G09F 7/00, B32B 27/00

(54) **Kunststoffplatten für Streifenvorhänge und Tore sowie Verfahren zu ihrer Herstellung**

(30) Priorität: 23.07.1999 DE 19934611
(71) Anmelder: Kautex Textron GmbH & Co. KG., 53229 Bonn (DE)
(72) Erfinder: Boll, Joachim, 53773 Hennef (DE); Peplinski, Christian, 53501 Grafschaft (DE)
(74) Vertreter: Patentanwälte Lippert, Stachow, Schmidt & Partner

(57) **Zusammenfassung**

Die Erfindung betrifft Kunststoffplatten für Streifenvorhänge (18) und Tore, die mit Warnstreifen, Informationsträgern, Markierungen (22) oder dgl. versehen sind, sowie ein Verfahren zur Herstellung derartiger Kunststoffplatten. Sie ist dadurch gekennzeichnet, daß die Kunststoffplatten als Laminat mit wenigstens zwei Tragschichten ausgebildet sind, zwischen denen im wesentlichen flächiges Material angeordnet ist, das Markierungen, Informationen (22) oder dgl. bildet oder trägt. Dabei nimmt dieses flächige Material nur den geringeren Teil der Fläche des Laminates in Anspruch. Wenigstens eine der Tragschichten des Laminates ist zumindest in dem Bereich, in welchem sich eine Information (22) befindet, durchscheinend derart, daß die Information, Markierung (22) und dgl. von außen wahrnehmbar ist.

## Beschreibung

Es ist bekannt, Kunststoffplatten beispielsweise in Form von mehreren vertikal verlaufenden flexiblen Streifen oder Lamellen zu verwenden, die eine Art Vorhang bilden, um einen Raum zu unterteilen oder gegenüber einem anderen Raum oder gegenüber der äußeren Umgebung abzuschließen. Die Streifen derartiger Streifenvorhänge sind an ihrem oberen Ende an der die Toröffnung umgebenden Wandung oder einem anderen Tragelement angebracht, von welchem sie frei nach unten hängen, so daß sie beispielsweise bei der Durchfahrt eines Transportkarrens oder eines anderen Fahrzeugs ausweichen und nachgeben und so eine Durchfahröffnung begrenzen, um sich nach Passieren des Fahrzeugs wieder selbständig in die Schließlage zurückzubewegen. Ferner sind Pendeltore bekannt, deren aus flexiblen Kunststoffplatten bestehende Flügel im allgemeinen jeweils um eine vertikale Achse schwenkbar sind, wobei die einander zugekehrten Begrenzungskanten und die unteren Begrenzungskanten der Flügel keine Einfassung aufweisen. Weiterhin sind Lauftore und Rolltore bekannt, die mit einer Einfassung, ggf. einen geschlossenen Rahmen versehen sind, welcher durch eine oder mehrere Kunststoffplatten ausgefüllt ist.

In allen Fällen besteht häufig die Notwendigkeit, irgendwelche Markierungen, Informationen, beispielsweise Warnstreifen und dgl. anzubringen, die beispielsweise insbesondere bei Verwendung von durchsichtigen Kunststoffplatten das Tor besser sichtbar machen und/oder bestimmte Hinweise, Gebote, Verbote und/ oder sonstige Informationen beinhalten, beispielsweise den Hinweis, daß in dem hinter dem Vorhang bzw. Tor liegenden Raum ein Schutzhelm zu tragen ist.

Es ist bekannt, derartige Warnstreifen, Informationen usw. außen auf den Lamellen eines Vorhanges oder der Kunststoffplatte eines Tores aufzukleben oder sonstwie anzubringen. Dies hat den Nachteil, daß dadurch die Kunststoffplatte eine Versteifung erfahren kann. Hinzu kommt, daß, wenn derartige Informationen oder Träger für dieselben mittels einer Warmbehandlung an der Kunststoffplatte angebracht werden, letztere sich insbesondere dann verziehen kann, wenn das die Kunststoffplatte bildende Material einerseits und das den Informationsträger oder dgl. bildende Material andererseits unterschiedliche Eigenschaften aufweisen, beispielsweise unterschiedliche Wärmeausdehnungs-koeffizienten, so daß nach Wärmebehandlung beim Erkalten die Materialien in unterschiedlicher Weise schrumpfen. Außen angebrachte Informationsträger weisen zudem den Nachteil auf, daß sie gegen äußere Einwirkungen nicht geschützt sind und somit im Laufe der Zeit unansehnlich werden oder nicht mehr erkennbar sind oder sich von der Kunststoffplatte lösen.

Die Erfindung betrifft Kunststoffplatten für Streifenvorhänge und Tore, die ganz oder zu einem großen Teil aus Kunststoffplatten bestehen und mit Markierungen, Warnstreifen oder sonstigen Informationen versehen sind. Ihr liegt die Aufgabe zugrunde, derartige Kunststoffplatten so auszubilden, daß die Markierungen und sonstigen Informationen, mit denen die Tore bzw. Streifenvorhänge versehen sind, gegen äußere Einwirkung geschützt sind. Darüberhinaus soll die Möglichkeit bestehen, die Markierungen, Informationsträger usw. so anzubringen, daß die Steifigkeit des Plattenmaterials nicht oder nur wenig beeinflußt wird, und zwar unabhängig davon, aus welchem Material die Markierungen, Informationsträger oder dgl. bestehen.

Die Lösung dieser Aufgabe ist im Kennzeichen des Anspruches 1 angegeben.

Aufgrund der Tatsache, daß die Markierungen, Informationen usw. sich im Inneren der Kunststoffplatte, nämlich zwischen den beiden Tragschichten, befinden, wird erreicht, daß sie gegen äußere Einwirkung geschützt sind. Eingehende Versuche haben gezeigt, daß auch dann, wenn die Markierung bzw. das Trägermaterial für diese nur in kleinen Abschnitten innerhalb der Kunststoffplatte vorgesehen ist, die Platte also nur auf kleinen Teilbereichen ihrer flächigen Erstreckung dreischichtig ist, keinerlei Ungleichmäßigkeiten oder dgl. entstehen. Dies ist einmal darauf zurückzuführen, daß die Markierungen, Informationen und dgl. bzw. die für diese verwendeten flächigen Trägermaterialien außerordentlich dünn sein, also beispielsweise eine Dicke zwischen 20 und 100 µ aufweisen können, so daß die dadurch ggf. bedingten Dickenunterschiede nicht ins Gewicht fallen, insbesondere die Funktion des Streifenvorhanges bzw. des Tores nicht beeinträchtigen. Zudem wird im allgemeinen zur Herstellung der Kunststoffplatten so vorgegangen, daß zwei Kunststoffbahnen, die an der fertigen Platte die Tragschichten bilden, unter zwischenfügung einzelner Abschnitte, die die Informationen oder dgl. tragen bzw. bilden, zwischen wenigstens einem Walzenpaar hindurchgeführt wird, so daß ein gewisser Druck ausgeübt wird, welcher ohnehin eine Vergleichmäßigung der Dicke der noch plastischen Kunststoffbahnen des Laminates über dessen Flächenerstreckung bewirkt.

Es ist natürlich auch möglich, ein kontinuierliches Band vorzugsweise z. B. in Form einer Kunststoff-Folie zwischen die beiden Kunststoffbahnen einzuführen, die an der fertigen Platte die Tragschichten bilden. Dabei kann das Band schmaler sein als die beiden Kunststoffbahnen. Bei Verwendung eines flächigen Trägermaterials beispielsweise in Form einer Folie, welches mindestens die Breite der Kunststoffbahnen, die an der fertigen Platte die Tragschicht bilden, aufweist, entsteht ohnehin eine über die gesamte flächige Erstreckung der Kunststoffplatte gleichmäßiges dreischichtiges Laminat. Im letztgenannten Fall wäre das flächige Trägermaterial in Form einer Folie oder dgl. dann nur auf Teilen mindestens einer seiner beiden Oberflächen bedruckt oder auf andere Weise mit den Markierungen, Informationen oder dgl. versehen.

Es ist natürlich auch möglich, das die Markierungen, Informationen oder dgl. bildende oder tragende flächige Material mit Löchern oder anderen Durchbrechungen zu versehen, beispielsweise derart, daß bei Verwendung von Bandmaterial dieses Löcher, Ausstanzungen oder sonstigen Durchbrechungen aufweist, so daß dieses Band zwar ein flächiges zusammenhängendes Material bildet, das jedoch nicht kontinuierlich im Sinne der Bildung einer durchgehenden, geschlossenen Fläche ist.

Als besonders zweckmäßig hat sich eine Ausführungsform herausgestellt, bei welcher die beiden Tragschichten der Kunststoffplatten von gleicher Dicke sind, so daß das die Markierungen, Informationen oder dgl. bildende bzw. tragende Material im fertigen Laminat etwa in der Ebene der neutralen Faser der resultierenden Kunststoffplatte verläuft und somit die Steifigkeit bzw. Verformbarkeit der Platten nicht oder nur in geringem Maße beeinflußt wird. Dies ist insbesondere für Streifenvorhänge und Pendeltore von Bedeutung, da die Beweglichkeit und Verformbarkeit der einzelnen Lamellen bzw. der Torflügel eine wesentliche Voraussetzung für deren Funktion darstellt.

Das Trägermaterial für die Informationen, Markierungen oder dgl. kann auch aus Papier bestehen, welches ggf. wenigstens einseitig mit einer dünnen Kunststoffschicht kaschiert ist, die mit dem Kunststoff der Kunststoffbahn, welcher die Kaschierung zugekehrt ist, verschweißbar ist. Es besteht auch die Möglichkeit, die Verbindung zwischen Markierung, Information und dgl. bildendem bzw. tragendem Material und den beiden Tragschichten der Kunststoffplatte mittels Kleben herzustellen.

Ferner besteht die Möglichkeit, als Trägermaterial für die Informationen, Markierungen und dgl. ein Gewebe, ein Vlies oder dgl. zu verwenden, wobei, wie im Falle der Verwendung von Papier als Trägermaterial, bei Einbringen des Trägermaterials in Form eines kontinuierlichen Bandes dieses eine gewisse Breite nicht überschreiten darf, um die Durchsichtigkeit des größten Teiles der Kunststoffplatte bzw. der Lamelle zu gewährleisten. In allen Fällen gilt, daß das bahnförmige Trägermaterial für die Informationen, Markierungen usw. auch eine Verstärkung für die Kunststoffplatten bzw. Lamellen darstellt.

In der Zeichnung sind einige Ausführungsbeispiele der Erfindung im Schema dargestellt. Es zeigen:
- Fig. 1: die Vorderansicht eines Rolltores,
- Fig. 2: die perspektivische Ansicht eines Streifenvorhangs,
- Fig. 3: ein Verfahren zur Herstellung von Kunststoffplatten gemäß der Erfindung,
- Fig. 4: ein zweites Verfahren zur Herstellung von Kunststoffplatten gemäß der Erfindung,
- Fig. 5: ein drittes Verfahren zur Herstellung von Kunststoffplatten gemäß der Erfindung.

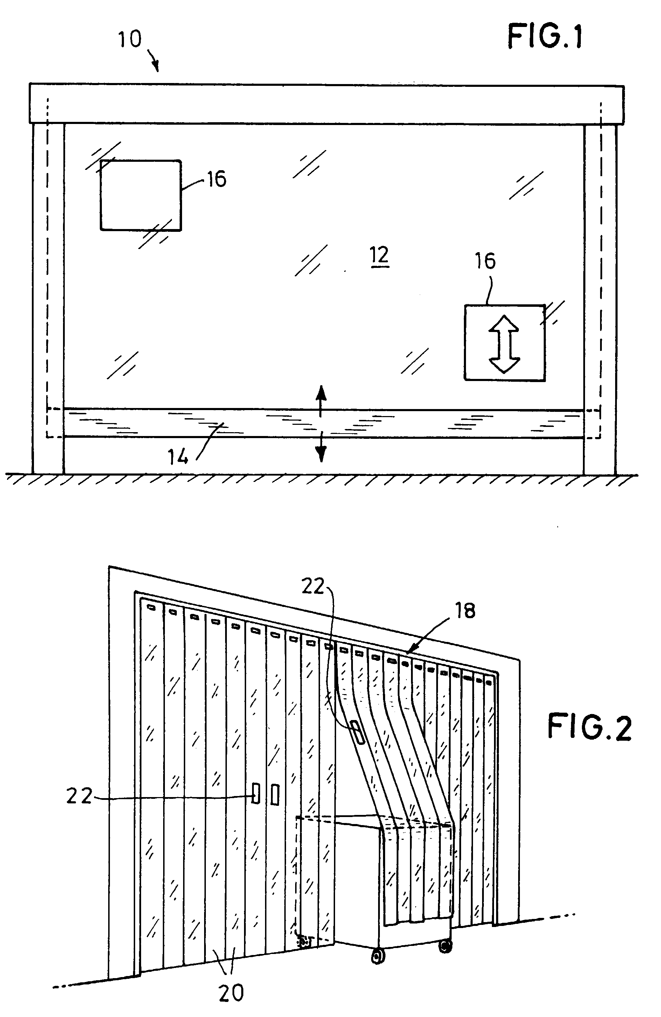

Fig. 1 zeigt im Schema die Vorderansicht eines Rolltores 10, welches nach oben geöffnet wird. Es besteht im wesentlichen aus einer Kunststoffplatte 12, die zumindest oben und unten mit einer Einfassung versehen ist, von welcher in der Zeichnung nur die untere Einfassung 14 dargestellt ist. Die Kunststoffplatte 12 des Rolltores 10 ist mit Informationsträgern 16 versehen, die zwischen den beiden Tragschichten angeordnet sind, aus denen die Kunststoffplatte 12 besteht, und von außen sichtbare Positionen tragen. Positionierung und Form der Informationsträger können in Abhängigkeit von den jeweiligen Voraussetzungen und Erfordernissen gewählt werden.

Fig. 2 zeigt einen Streifenvorhang 18, der aus einer Vielzahl von oben befestigten und herunterhängenden Streifen oder Lamellen 20 besteht, die beispielsweise eine Breite zwischen 20 cm und 40 cm aufweisen und vorzugsweise aus Weich-PVC bestehen. Die den Streifenvorhang bildenden Lamellen 20 können einander geringfügig überlappend angeordnet sein, wenngleich dies nicht in allen Fällen erforderlich ist. Die Dicke der Lamellen kann z. B. 2 - 4 mm betragen, wenngleich auch andere Abmessungen möglich sind.

Auch hier gilt, daß die Informationsträger 22 in Abhängigkeit von den jeweiligen Erfordernissen und Gegebenheiten positioniert und begrenzt sein können. Die Herstellung der einzelnen Lamellen kann in der Weise geschehen, daß zunächst eine breitere Kunststoffplatte hergestellt wird, aus der dann durch entsprechende Schneidvorgänge die einzelnen Lamellen gewonnen werden. Es ist natürlich auch möglich, die Lamellen aus einzelne Streifen oder Platten herzustellen, bei denen ggf. nur noch die Längskanten beschnitten zu werden brauchen. Welcher Weg der Herstellung gewählt wird, wird im wesentlichen abhängen von der Breite der Lamellen.

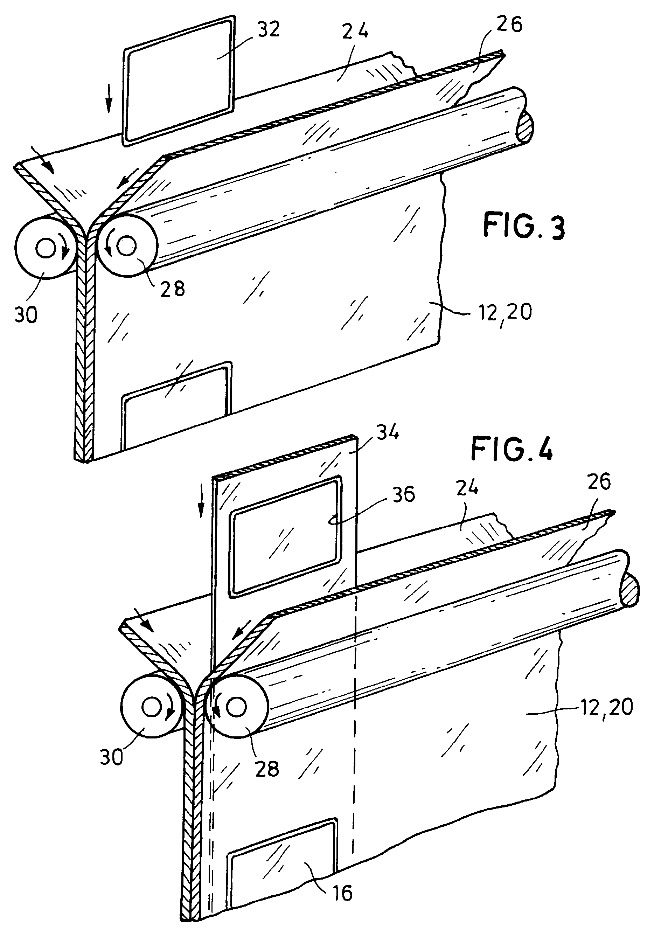

Bezüglich der Fertigung der Kunststoffplatten bzw. der daraus ggf. herzustellenden Lamellen stimmen alle drei Ausführungsbeispiele gemäß den Fig. 3 - 5 darin überein, daß zwei Kunststoffbahnen 24, 26 in warmplastischem Zustand zwischen den wenigstens zwei Walzen 28, 30 einer Walzenpresse hindurchgeführt werden, deren Spaltbreite etwa der Dicke der resultierenden Kunststoffplatte 12 bzw. Lamelle 20 entspricht. Beim Ausführungsbseispiel gemäß Fig. 3 werden zwischen die beiden Bahnen 24, 26 einzelne Abschnitte 32 derart eingeführt, daß sie von den beiden Walzen 28, 30 eingezogen und dabei Bestandteil des Plattenmaterials werden, welches sich im Spalt zwischen den Walzen 28 und 30 aufgrund des durch diese ausgeübten Druckes bildet. Die Abschnitte 32 können aus Kunststoff, aber auch Papier oder sonstigem geeigneten Material bestehen. Es wird von der für das Einführen der Abschnitte 32 zwischen die beiden Bahnen 24 und 26 benutzten Einrichtung abhängen, wie dick die Abschnitte 32 sein müssen, um eine für ihre Handhabbarkeit ggf. erforderliche Eigensteifigkeit aufzuweisen. Jede der beiden Bahnen 24 und 26 kann ein Extrudat darstellen, welches aus einem für diese Zwecke üblichen Extruder zum Verarbeiten von thermoplastischem Kunststoff zugeführt wird. Im Ergebnis bilden die Abschnitte 32 dann Informationsträger 16, wie sie in Fig. 1 dargestellt sind.

Beim Ausführungsbeispiel gemäß Fig. 4 wird ein Informationsträger 34 zwischen die beiden Kunststoffbahnen 24, 26 kontinuierlich eingeführt, wobei dieser Informationsträger 34 entlang seinem Längsverlauf mit in Abständen voneinander angeordneten Informationen 36 versehen ist, bei denen es sich um Aufdrucke, ggf. aber auch um aufgeklebte Etiketten oder dgl. handeln kann. Hier entsteht somit ein durchgehendes dreischichtiges Laminat, das sich allerdings nur über einen Teil der Breite der resultierenden Kunststoffplatte erstreckt. Es hat sich als zweckmäßig herausgestellt, als Trägermaterial eine Kunststoff-Folie zu verwenden, die mit dem Material wenigstens einer der beiden Bahnen 24, 26 verschweißbar ist. Zweckmäßigerweise ist das die Informationsträger 34 bildende Band ebenfalls durchsichtig, so daß die resultierende Kunststoffplatte 12 bzw. Kunststofflamelle 20 in den Bereichen, die keine Informationen tragen, genauso durchsichtig oder durchscheinend ist wie in den Bereichen der Platte bzw. Lamelle, in denen kein Informationsträger 34 einlaminiert ist.

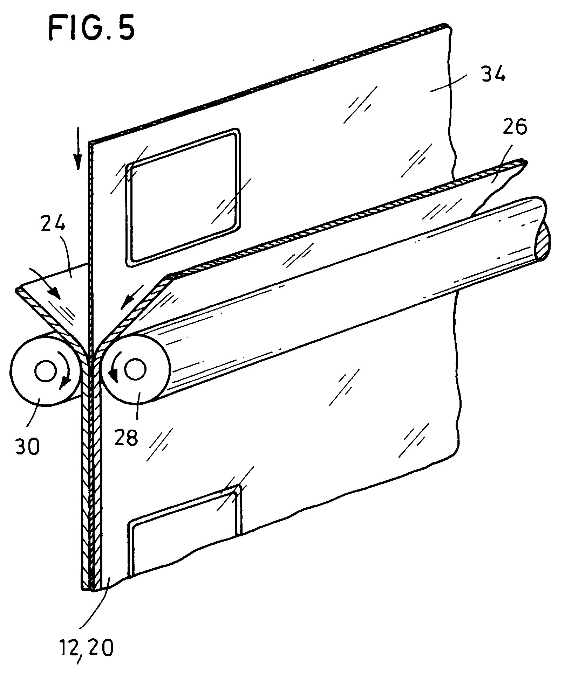

Das Ausführungsbeispiel gemäß Fig. 5 unterscheidet sich von jenem gemäß Fig. 4 im wesentlichen nur dadurch, daß der zwischen die beiden Kunststoffbahnen 24, 26 eingeführte und mit letzterem zu einem Laminat zu verbindende Informationsträger 34 eine Breite aufweist, welche mit der Breite der beiden Kunststoffbahnen 24, 26, die an der fertigen Kunststoffplatte bzw. -lamelle die Tragschichten 38, 40 bilden, übereinstimmt. Hier wird somit über die gesamte Breite der resultierenden Platte bzw. Lamelle ein dreischichtiges Laminat gebildet.

Normalerweise sind die Kunststoffplatten für die hier in Betracht kommenden Tore und Vorhänge über ihre gesamte flächige Erstreckung, abgesehen von den eingelagerten Informationen usw. durchsichtig, zumindest durchscheinend. Es ist natürlich auch möglich, die Erfindung in solchen Fällen anzuwenden, bei denen eine der beiden Kunststoffbahnen bzw. die daraus gebildete Tragschicht aus nicht durchscheinendem oder durchsichtigem Material besteht und die andere Kunststoffbahn bzw. Tragschicht aus durchsichtigem Material besteht, wobei dann die zwischen beiden Bahnen bzw. Tragplatten angeordneten Informationen durch die durchsichtige Tragschicht erkennbar wären.

In der Mehrzahl der Fälle werden die Kunststoffplatten aus PVC, insbesondere Weich-PVC bestehen, wobei die Platten für Lamellen und Pendeltore etwas weicher sein können als die Platten von Lauf- oder Rolltoren, bei denen es auf eine mögliche Verformung beim Öffnen und Schließen weniger ankommt.

## Patentansprüche

1. Kunststoffplatten für Streifenvorhänge und/oder Tore, die mit Warnstreifen, Informationsträgern, Markierungen oder dgl. versehen sind, **dadurch gekennzeichnet**, daß die Kunststoffplatten als Laminat mit wenigstens zwei Tragschichten (38, 40) ausgebildet sind, zwischen denen im wesentlichen flächiges Material (32, 34) für Markierungen, Informationen (16, 22) oder dgl. angeordnet ist, und dieses flächige Material nur einen Teil der Fläche des Laminates in Anspruch nimmt und wenigstens eine Tragschicht (38, 40) des Laminates in dem wenigstens einen Bereich, in welchem sich eine Information (36) befindet, wenigstens so durchscheinend ist, daß die Markierung, Information und dgl. von außen wahrnehmbar ist.

2. Kunststoffplatten nach Anspruch 1, **dadurch gekennzeichnet**, daß beide Tragschichten (38, 40) des die Kunststoffplatten bildenden Laminates zumindest im Bereich, in welchem eine Information (36) angeordnet ist, zumindest durchscheinend sind.

3. Kunststoffplatten nach Anspruch 1, **dadurch gekennzeichnet**, daß die beiden Tragschichten (38, 40) des die Kunststoffplatte bildenden Laminates gleich dick sind und das im wesentlichen flächige Material für die wenigstens eine Information, Markierung oder dgl. (36), welches wesentlich dünner ist als die Tragschichten, im wesentlichen in der neutralen Faser der von beiden Tragschichten (38, 40) gebildeten Platte angeordnet ist.

4. Kunststoffplatten nach Anspruch 1, **dadurch gekennzeichnet**, daß das die Information, Markierung oder dgl. (36) tragende oder bildende flächige Material mit wenigstens einer der beiden Tragschichten (38, 40) kompatibel ist derart, daß es mit dieser Schicht verschweißbar ist.

5. Kunststoffplatten nach Anspruch 1, **dadurch gekennzeichnet**, daß das flächige Material (32, 34) für den wenigstens einen Informationsträger mit wenigstens einer der beiden Tragschichten (38, 40) verklebt ist.

6. Kunststoffplatten nach Anspruch 1, **dadurch gekennzeichnet**, daß die auf diesem Trägermaterial (32, 34) befindliche Substanz, die die Information, die Markierung oder dgl. bildet, beispielsweise die auf einem flächigen Trägermaterial aufgebrachte Druckfarbe, mit einer dünnen Beschichtung versehen ist, die mit dem wenigstens eine der Tragschichten bildenden Material verschweißbar oder verklebbar ist.

7. Kunststoffplatten nach Anspruch 1, **dadurch gekennzeichnet**, daß das als Folie ausgebildete Trägermaterial für die Information, die Markierung oder dgl. aus dem gleichen Material besteht wie wenigstens eine der beiden Tragschichten (38, 40).

8. Kunststoffplatten nach Anspruch 1, **dadurch gekennzeichnet**, daß das Trägermaterial für die Informationen, die Markierung oder dgl. als Gewebe oder Vlies ausgebildet ist.

9. Kunststoffplatten nach Anspruch 1, **dadurch gekennzeichnet**, daß das Trägermaterial beidseitig mit Informationen, Markierungen (36) oder dgl. versehen ist.

10. Kunststoffplatten nach Anspruch 1, **dadurch gekennzeichnet**, daß ihre Tragschichten (38, 40) aus PVC, vorzugsweise Weich-PVC bestehen.

11. Kunststoffplatten nach Anspruch 1, **dadurch gekennzeichnet**, daß das Trägermaterial (34) für die Informationen, die Markierungen oder dgl. kontinuierlich ausgebildet und nur auf Teilen seiner Bereiche mit Informationen, Markierungen oder dgl. (36) versehen ist.

12. Kunststoffplatten nach Anspruch 11, **dadurch gekennzeichnet**, daß das Trägermaterial zumindest in bezug auf seine Durchsichtigkeit die gleichen Eigenschaften hat wie wenigstens eine der beiden Tragschichten (38, 40).

13. Kunststoffplatten nach Anspruch 1, **dadurch gekennzeichnet**, daß die Informationen, Markierungen oder dgl. nicht mehr als 50% der Gesamtfläche der jeweiligen Kunststoffplatte einnehmen.

14. Verfahren zum Herstellen von Kunststoffplatten für Tore und/oder Streifenvorhänge, die mit Informationen, Markierungen und dgl. versehen sind, **dadurch gekennzeichnet**, daß zwei Kunststoffbahnen (24, 26), die an der fertigen Platte die Tragschichten (38, 40) bilden, unter Zwischenfügung von Trägermaterial (32, 34) für die Informationen, Markierungen (36) oder dgl. zwischen den Walzen (28, 30) wenigstens eines Walzenpaares laminiert und miteinander verbunden werden.

15. Verfahren nach Anspruch 14, **dadurch gekennzeichnet**, daß sich die beiden Kunststoffbahnen (28, 30) zur Bildung der Tragschichten (38, 40) der Kunststoffplatte in warmplastischem Zustand befinden und das Trägermaterial für die Information, die Markierung oder dgl., das zwischen den beiden Kunststoffbahnen liegend mit diesen laminiert wird, in festem Zustand dem Bereich zugeführt wird, in welchem es mit den beiden Kunststoffbahnen (28, 30) verbunden wird.

16. Verfahren nach Anspruch 14, **dadurch gekennzeichnet**, daß das zwischen die beiden Kunststoffbahnen (24, 26) eingeführte Trägermaterial für die Informationen (36) in Form von Einzelabschnitten (32) zugeführt wird.

17. Streifenvorhang mit flexiblen Lamellen aus Kunststoff, **dadurch gekennzeichnet**, daß er unter Verwendung wenigstens einer Kunststoffplatte gemäß wenigstens einem der vorhergehenden Ansprüche 1 - 13 hergestellt ist.

18. Pendeltor, dessen wenigstens einer Flügel wenigstens eine flexible Kunststoffplatte aufweist, **dadurch gekennzeichnet**, daß es unter Verwendung wenigstens einer Kunststoffplatte gemäß wenigstens einem der Ansprüchen 1 - 13 hergestellt ist.

19. Lauftor bzw. Rolltor, das mit wenigstens einer Kunststoffplatte versehen ist, **dadurch gekennzeichnet**, daß die Kunststoffplatte gemäß wenigstens einem der Ansprüche 1 - 13 ausgebildet ist.
